Europäisches Patentamt

European Patent Office

Office européen des brevets

(19)

(11) Veröffentlichungsnummer : **0 025 103**
**B1**

(12) **EUROPÄISCHE PATENTSCHRIFT**

(45) Veröffentlichungstag der Patentschrift :
**11.05.83**

(21) Anmeldenummer : **80104336.5**

(22) Anmeldetag : **23.07.80**

(51) Int. Cl.³ : **B 65 G 69/00**, E 06 B 7/16

(54) **Verladetor-Abdichtung.**

(30) Priorität : **27.07.79 DE 2930611**

(43) Veröffentlichungstag der Anmeldung :
**18.03.81 Patentblatt 81/11**

(45) Bekanntmachung des Hinweises auf die Patenterteilung : **11.05.83 Patentblatt 83/19**

(84) Benannte Vertragsstaaten :
**BE CH DE LI NL SE**

(56) Entgegenhaltungen :
**DE A 2 555 201**
**DE A 2 625 661**
**DE A 2 750 417**
**US A 1 877 950**
**US A 3 403 489**

(73) Patentinhaber : **HÜBNER Gummi- und Kunststoff
GmbH.**
**Agathofstrasse 15**
**D-3500 Kassel-Bettenhausen (DE)**

(72) Erfinder : **Koch, Robert**
**Schlesierstrasse 3**
**D-3437 Bad Soden Allendorf (DE)**

(74) Vertreter : **Walter, Helmut**
**Aubingerstrasse 81**
**D-8000 München 60 (DE)**

Verladetor-Abdichtung

Die Erfindung bezieht sich auf eine Vorrichtung zum Abdichten des Zwischenraumes zwischen der Umgrenzung eines Verladetores und dem dem Verladetor zugekehrten Ende eines durch das Verladetor hindurch zu be- oder entladenden Behälters in der Form eines Seitenwände und eine Oberseite aufweisenden Faltenbalges, der mit seinem hinteren Ende an der Umgrenzung gehalten ist, mit seinem vorderen Ende an den Behälter heranbringbar ist, der Mittel aufweist, mit denen der ausgezogene Balg in vertikaler Richtung abgestützt ist und der im Bereich seines äußeren Endes oben und unten am einen Ende einer vertikal biegesteifen, in Längsrichtung des Balges längsveränderlichen Scherenführung gehalten ist, die mit ihrem anderen Ende an der Umgrenzung des Verladetores befestigt ist.

Solche Verladetor Abdichtungen werden bisher in der Weise verwendet, daß die Oberseite des Faltenbalges an starren Teleskopführungen aufgehängt ist, um ein Durchhängen des Faltenbalges ohne Behinderung seiner Längenveränderbarkeit zu verhindern. Diese Lösung hat den Nachteil, daß der Aufwand der Befestigung des Balges an der Torumgrenzung relativ hoch ist, insbesondere wenn diese Umgrenzung ein an sich zu schwaches Mauerwerk ist, das für die Befestigung der frei auskragenden Teleskopführung erst verstärkt werden muß. Aber auch wenn die Bereitschaft besteht, hierzu einen relativ großen Aufwand zu treiben, sind dem freien Auskragen der Teleskopführung, d. h. der Länge des Faltenbalges, Grenzen gesetzt. Trotz dieser Einschränkungen muß aber die rückseitige Befestigung der Führung zusätzlich durch Diagonalstreben abgesichert werden, was eine relativ große Bauhöhe und unter Umständen Einschränkung der lichten Höhe des Faltenbalges bedeutet. Schließlich besteht für den ständigen Betrieb noch der Nachteil, daß der zu beladende oder entladende Behälter sehr genau vor die Entladeöffnung gebracht werden muß, da der Faltenbalg zwar seitliche Versetzungen in Grenzen ausgleichen könnte, die Teleskopführung dies aber nicht zuläßt. Eine exakte Übereinstimmung ist aber selbst dann schwierig zu erreichen, wenn der Behälter auf einem Fahrzeug verladen ist oder selbst der Aufbau eines Fahrzeuges ist. Die Rangierfähigkeit von schienenunabhängigen Fahrzeugen ist oft gerade die Ursache einer seitlichen Versetzung zwischen Behälter und Verladetor.

Zur Vermeidung dieser Nachteile sieht die Lösung nach der DE-A 26 25 661, von der die Erfindung ausgeht, vor, daß der Faltenbalg mit seinem vorderen Ende über eine oder mehrere um eine horizontale Achse drehbare, um eine vertikale Achse schwenkbare Rollen auf einer Lauffläche abgestützt ist. Als Rolle könnte eine entsprechend gelagerte Kugel in Frage kommen, vorzugsweise soll jedoch die Rolle eine um eine vertikale Achse um bis zu 360° schwenkbare Zylinderrolle mit horizontal quer zur Längsachse des Faltenbalges liegender Drehachse sein. Als drucksteife Mittel kommen insbesondere Scherenführungen infrage, die den Faltenbalg in sich vertikal stützen.

Mit dieser bekannten Lösung kann der Faltenbalg jede praktisch geforderte Länge haben, ohne daß komplizierte Aufhängevorrichtungen erforderlich wären. Auf eine solche Aufhängung, wie sie bei anderen bekannten Lösungen als aufwendige Baugruppen notwendig sind, kann entweder ganz verzichtet werden, oder sie können auch bei extrem lang auszuziehenden Faltenbälgen sehr einfach sein, beispielsweise einfache Expanderzüge sein. Die Umgrenzung des Verladetores muß nicht besonders stabil sein, und die lichte Höhe wird in keiner Weise eingeschränkt. Für die vordere Rollenabstützung müssen demgegenüber bauseitig keinerlei Vorkehrungen getroffen werden, da das Be- und Entladen von Behältern im allgemeinen ohnehin mit Rollwagen, Gabelstaplern und dergleichen erfolgt, eine Rollbahn also im allgemeinen vorhanden ist, die weit über die Bedürfnisse der Faltenbalgabstützung hinausgeht. Darüber hinaus kann aber auch eine erhebliche seitliche Versetzung zwischen dem Verladetor und dem zu be- oder entladenden Behälter hingenommen werden, ohne daß der Betrieb gestört wird, weil der Faltenbalg nach beiden Seiten von seiner Normalstellung aus um nahezu bis zu 90° verschwenkt werden kann. Außerdem finden einfache, bewährte Bauteile Anwendung, so daß diese Vorteile ohne großen Aufwand erreicht werden und die Vorrichtung ohne besondere Wartung betriebssicher ist.

Aufgabe der vorliegenden Erfindung ist die Ausgestaltung der Lösung gemäß der DE-A 26 25 661 so, daß einerseits wie bei den davor bekannten Lösungen auf die vordere Rollenabstützung verzichtet werden kann, andererseits aber trotzdem auch zumindest bei mittleren Auszuglängen unter Verwendung baulich einfacher Mittel zuverlässig ein Durchhängen des Balges vermieden wird. Unter einer « mittleren » Auszuglänge wird die Auszuglänge eines Abdichtungsbalges verstanden, die größer ist, als daß ohne jede vertikale Abstützung des Balges auszukommen wäre, die jedoch andererseits nicht so groß ist, als daß nur eine Abstützung am vorderen Ende auf dem Boden, wie sie bei der DE-A 26 25 661 vorgesehen ist, ein unzulässiges Absacken des vorderen Balgendes verhindern könnte. Auch soll eine Festigkeit der Umgrenzung des Ladetores vorausgesetzt werden, die die Aufnahme eines relativ großen Biegemomentes gestattet.

Zur Lösung der gestellten Aufgabe schlägt die Erfindung vor, daß jede der Seitenwände des Faltenbalges an ihrem unteren Rand an einem in vertikaler Richtung weitgehend biegesteifen Gelenkband gehalten ist, das aus einer der Anzahl der Balgbahnen entsprechenden Anzahl von vertikal steifen Gliedern besteht, von denen jedes Glied aus einem mittleren, längeren und zwei seitlichen daran anschließenden kürzeren Abschnitten besteht, wobei der mittlere und die zugehörigen seitlichen Abschnitte jeweils nahe der benachbarten Balgfalte durch Gelenke mit vertikaler Drehachse miteinander verbunden sind und wobei jeder der längeren Abschnitte mit einer Balgbahn verbunden ist und die jeweils einer Falte benachbarten Bereiche der an diese Falte anschließenden Balgbahnen zwischen den dieser Falte benachbarten kürzeren Gelenkbahnabschnitten eingeklemmt bzw. von aussen an diesen befestigt sind.

Mit der Erfindung ist es möglich, bei einer gattungsgemäßen Vorrichtung den Faltenbalg auf eine relativ große Länge auszuziehen, ohne daß er durchhängt oder sein vorderes Ende durchsackt. Mit den beiden Gelenkbändern an den unteren Enden der Seitenwände des Faltenbalges ist dieser ohne Beeinträchtigung der Möglichkeit der Längenänderung so steif, daß es genügt, ihn an zwei Scherenführungen aufzuhängen.

Die vertikale Versteifung vertikaler zwischen oberen und unteren Scherenführungen angeordneter ebener Bälge mittels vertikal steifer Gelenkbänder ist an sich nicht neu. Bei einer solchen bekannten Lösung (US-A 18 77 950) bestehen die am oberen und unteren Ende des Balges angeordneten und mit den dort angeordneten, vertikal nachgiebigen Scherenführungen baulich zusammengefaßten Gelenkbänder aus einer der Anzahl der Balgbahnen entsprechenden Anzahl von jeweils einstückigen Gelenkbandabschnitten, die in Gelenken mit vertikalen Schwenkachsen zusammengefügt sind und untereinander gleich lang sind, wobei diese Länge der Breite der Balgbahnen zwischen je zwei Balgfalten entspricht und die Gelenkbandabschnitte so auf die Balgbahnen aufgesetzt sind, daß jeweils ein Gelenk mit seiner Schwenkachse auf einer der Falten zwischen zwei Balgbahnen sitzt. Dieser Lösung gegenüber hat die erfindungsgemäße Ausgestaltung des Gelenkbandes den Vorteil, daß es wesentlich besser dem bei Faltenbälgen der vorausgesetzten Art vorliegenden Problemen Rechnung trägt. Die kürzeren Gelenkbandabschnitte, zwischen denen die jeweils einer Falte benachbarten Bereiche der an diese Falte anschließenden Balgbahnen eingespannt sind, versteifen, verstärken und schützen die Balgfalten zwischen den einzelnen Balgbahnen, was im Hinblick auf die Beanspruchung von Faltenbälgen der hier in Rede stehenden Art und insbesondere am unteren Ende sehr erwünscht ist. Eine gute Versteifung ist insbesondere dann gegeben, wenn in weiterer Ausgestaltung der Erfindung zusammen mit den Balgfalten in diese eingelegte über die Seitenwände und die Oberseite des Faltenbalges verlaufende weitgehend steife Rahmen mit den Balgbahnen zwischen je zwei kürzeren, seitlichen Gelenkbandabschnitten eingespannt sind. Andererseits beeinträchtigt die erfindungsgemäße Ausgestaltung der Gelenkbänder kaum die Fähigkeit des Balges, in Längsrichtung veränderbar zu sein.

Im wesentlichen durch die Anwendung der erfindungsgemäßen Gelenkbänder ist der Faltenbalg in vertikaler Richtung so steif, daß die Längenänderung in weiterer Ausgestaltung der Erfindung mit einem motorischen Antrieb zum Ein- bzw. Ausfahren des Faltenbalges bewirkt werden kann, der nur einen einzigen Antriebsmotor aufweist und mittig auf das vordere Balgende, vorzugsweise an dessen Oberseite, einwirkt.

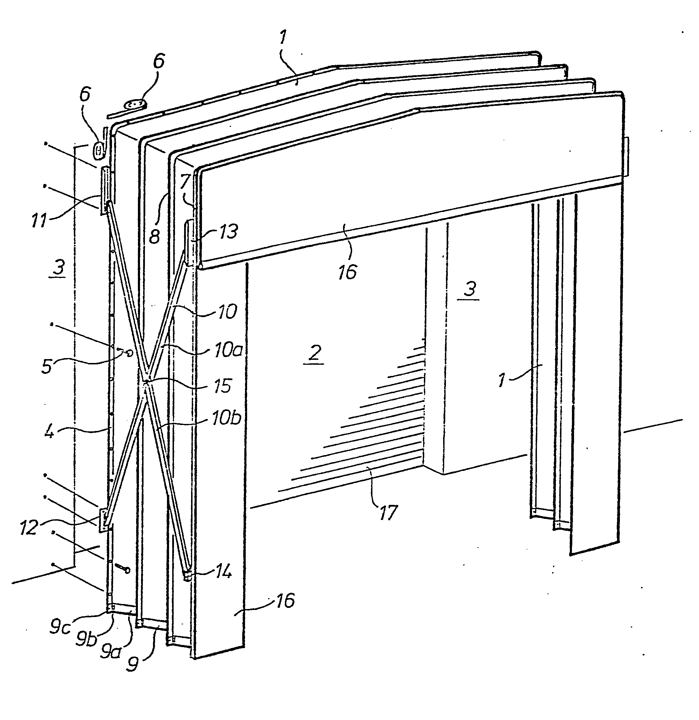

Die Erfindung ist nachfolgend anhand des in der Zeichnung in perspektivischer Darstellung dargestellten Ausführungsbeispieles der Erfindung erläutert. In der Zeichnung ist ein Ausführungsbeispiel der Erfindung dargestellt, wodurch die Erfindung nicht eingeschränkt werden soll, andererseits ist in der Zeichnung eine Lösung gemäß der Erfindung dargestellt, die sich in der Praxis bereits bewährt hat und die deswegen als eine besonders zweckmäßige Lösung gemäß der Erfindung anzusehen ist.

Ein Faltenbalg 1 mit zwei Seitenwänden und einer Oberseite ist mit seinem hinteren Ende, eine Wandöffnung 2 als sogenanntes Verladetor umschließend, an dem die Wandöffnung 2 umgrenzenden Mauerwerk 3 eines Lagerschuppens oder dgl. angeschlossen. Dem Anschluß dient ein hinterer Anschlußrahmen 4, der in das Material des Faltenbalges 1 eingearbeitet ist oder auf den Faltenbalg aufgesetzt ist: Der Befestigung des Anschlußrahmens 4 an dem Mauerwerk 3 dienen Schrauben 5, die durch Löcher des Anschlußrahmens 4 hindurchgesteckt und in Gewindelöcher des Mauerwerkes eingeschraubt sind und nach dem Einschrauben mit ihren Köpfen an der Außenseite des Anschlußrahmens, diesen an das Mauerwerk anlegend, anliegen. Vor dem Anschrauben des Anschlußrahmens 4 am Mauerwerk 3 ist ein Dichtband 6 auf dem Mauerwerk aufgeklebt, das etwaige Unebenheiten des Mauerwerkes ausgleicht und Spalten zwischen Mauerwerk und Anschlußrahmen vermeidet. An seinem vorderen Ende ist der Faltenbalg 1 mit einem dem Anschlußrahmen 4 entsprechenden Endrahmen 7 versehen. Gegebenenfalls sind auch noch Zwischenrahmen im Bereich der Außenfalten 8 des Faltenbalges diesem zugeordnet.

Im Bereich der unteren Enden des Faltenbalges 1 ist diesem je ein erfindungsgemäßes Gelenkband 9 zugeordnet. Jedes Gelenkbandglied besteht aus einem vertikalen Streifen 9a aus Metall oder dergleichen, der an jedem Ende ein Scharnier 9b mit vertikaler Schwenkachse aufweist. Das Scharnier liegt kurz vor einer Falte zwischen zwei aufeinander folgenden Balgbahnen. Bis zu der Falte schließt sich an das Scharnier 9b ein entsprechend kurzer vertikaler Streifen 9c an. Die beiden kurzen Streifen 9c zu beiden Seiten einer Falte sind unter Zwischenlage der an die Falte anschließenden Bereiche der zur Falte zusammengeführten Balgbahnen miteinander verschraubt oder vernietet. Auf diese Weise behindern die beiden Gelenkbänder 9 nicht das Ausziehen und Zusammenschieben des Faltenbalges, si bilden jedoch eine in vertikaler Richtung biegesteife Versteifung des Balges an seinen beiden unteren Enden, von denen aus dieser in bekannter Weise einen Tunnel zwischen dem Lagerschuppen und beispielsweise dem hinteren Ende eines zu be- oder entladenden Fahrzeuges bildet. Gleichzeitig schützen sie den Balg an den besonders gefährdeten unteren Balgenden.

Der « Aufhängung » des vorderen Balgendes dient an jeder Seite eine Scherenführung 10. Am hinteren Ende sind die beiden Stangen 10a, 10b jeder Scherenführung in Konsolen 11, 12 gelenkig am Mauerwerk 3 seitlich vom Anschlußrahmen 4 angeschlossen. Die vorderen Enden der Stangen 10a, 10b sind in entsprechender Weise in Konsolen 13, 14 am vorderen Endrahmen 7 angelenkt. In der Mitte sind die Stangen 10a, 10b jeder Scherenführung 10 durch einen Zapfen 15 gelenkig miteinander verbunden.

Am vorderen Endrahmen 7 sind elastische Schürzen 16 befestigt, die den freien Tunnelquerschnitt des Balges variabel verkleinern, um eine Abdichtung bei verschiedenen Querschnitten des zu be- bzw. entladenden Behälters oder dergleichen zu gewährleisten. Bei Nichtgebrauch ist die Toröffnung durch einen Rolladen 17 oder dergleichen verschließbar.

Die Führung des Balges ist so exakt, daß die Längenänderung des Balges mit einem Antrieb bewirkt werden kann, der nur einen einzigen Antriebsmotor aufweist, der in Wirkverbindung mit der Mitte des vorderen oberen Ende des Faltenbalges steht.

### Ansprüche

1. Vorrichtung zum Abdichten des Zwischenraumes zwischen der Umgrenzung (Mauerwerk 3) eines Verladetores bzw. einer Wandöffnung (2) und dem dem Verladetor zugekehrten Ende eines durch das Verladetor hindurch zu be- oder entladenden Behälters in der Form eines Seitenwände und eine Oberseite aufweisenden Faltenbalges (1), der mit seinem hinteren Ende an der Umgrenzung gehalten ist, mit seinem vorderen Ende an den Behälter heranbringbar ist, der Mittel aufweist, mit denen der ausgezogene Balg in vertikaler Richtung abgestützt ist und der im Bereich seines äußeren Endes oben und unten am einen Ende einer vertikal biegesteifen, in Längsrichtung des Balges längenveränderlichen Scherenführung (10) gehalten ist, die mit ihrem anderen Ende an der Umgrenzung des Verladetores befestigt ist, dadurch gekennzeichnet, daß jede der Seitenwände des Faltenbalges (1) an ihrem unteren Rand an einem in vertikaler Richtung weitgehend biegesteifen Gelenkband (9) gehalten ist, das aus einer der Anzahl der Balgbahnen entsprechenden Anzahl von vertikal steifen Gliedern besteht, von denen jedes Glied aus einem mittleren, längeren und zwei seitlichen daran anschließenden, kürzeren Abschnitten (9a, 9c) besteht, wobei der mittlere und die zugehörigen seitlichen Abschnitte jeweils nahe der benachbarten Balgfalte durch Gelenke (9b) mit vertikaler Drehachse miteinander verbunden sind und wobei jeder der längeren Abschnitte (9a) mit einer Balgbahn verbunden ist und die jeweils einer Falte benachbarten Bereiche der an dieser Falte anschließenden Balgbahnen zwischen den dieser Falte benachbarten kürzeren Gelenkbandabschnitten eingeklemmt bzw. von aussen an diesen befestigt sind.

2. Vorrichtung nach Anspruch 1, dadurch gekennzeichnet, daß je zwei kürzere Abschnitte (9c) zweier im Bereich der Außenfalten (8) des Faltenbalges (1) aufeinander folgender Glieder des Gelenkbandes (9) unter Zwischenschaltung eines Endes eines an sich bekannten über die Seitenwände und die Oberseite des Faltenbalges sich erstreckenden, in vertikaler Richtung weitgehend steifen Rahmens (4, 7) miteinander verbunden sind.

3. Vorrichtung nach Anspruch 2, dadurch gekennzeichnet, daß auf die Außenseite des vordersten Rahmens (7) ebene, biegeelastische, den freien Balgquerschnitt verkleinernde Schürzen (16) aufgesetzt sind.

4. Vorrichtung nach einem der Ansprüche 1 bis 3, gekennzeichnet durch einen motorischen Antrieb zum Ein- bzw. Ausfahren des Faltenbalges, der einen einzigen Antriebsmotor aufweist und mittig auf das vordere Balgende, vorzugsweise an dessen Oberseite, einwirkt.

### Claims

1. A device for sealing the gap between the surround (brickwork 3) of a loading door or a wall opening (2) and that end of a container which is adjacent the loading door, said container being intended for loading or unloading through said door, the sealing device being in the form of a bellows (1) which comprises side walls and a top, the rear end of the bellows being held against the surround while the front end is adapted to be moved up to the container, the said bellows having means whereby the extended bellows is supported vertically, said bellows being held at the top and bottom, in the region of its outer end, at one end of a scissors guide (10), which is rigid in respect of vertical bending, is of variable length in the longitudinal direction of the bellows, and is secured by its other end to the loading door surround, characterised in that each of the side walls of the bellows (1) is held, at its bottom edge, on an articulated strip (9) which is substantially rigid in respect of vertical bending and which consists of a number of vertically rigid members corresponding to the number of bellows segments, each member consisting of a middle longer portion and two laterally adjoining shorter portions (9a, 9c), the middle and associated lateral portions each being interconnected near the adjacent bellows fold by joints (9b) with a vertical pivot axis, each of the longer portions (9a) being connected to a bellows segment and in each area adjacent a fold the bellows segments adjoining that fold are clamped between the shorter articulated strip portions adjacent that fold or are secured to said portions from outside.

2. A device according to claim 1, characterised in that each pair of shorter portions (9c) of two consecutive members of the articulated strip (9) in the region of the outer folds (8) of the bellows (1) are interconnected with the interposition of one end of a frame known per se (4, 7), said frame extending over the side walls and the top of the bellows and being substantially rigid vertically.

3. A device according to claim 2, characterised in that flat flexurally resilient aprons (16) which reduce the size of the free bellows cross-section are fitted to the outside of the front frame (7).

4. A device according to any one of claims 1 to 3, characterised by a motor drive for retracting or extending the bellows, said drive comprising a single drive motor and acting centrally on the front end of the bellows, preferably at the top thereof.

**Revendications**

1. Dispositif destiné à fermer de manière étanche l'espace entre le cadre (mur 3) d'une porte de chargement ou d'une ouverture (2) dans un mur et l'extrémité d'un réservoir tournée vers la porte de chargement, ledit réservoir devant être chargé ou déchargé à travers la porte de chargement, ledit dispositif ayant la forme d'un soufflet en accordéon (1) présentant des parois latérales et une paroi supérieure et étant fixé, par son extrémité arrière, au cadre et pouvant être amené, par son extrémité avant, jusqu'au réservoir, le soufflet (1) comportant des moyens par lesquels il s'appuie verticalement, à l'état déployé, et étant fixé, près de son extrémité extérieure, aux parties supérieure et inférieure, à une extrémité d'un guide en forme de ciseaux (10), qui est rigide à la flexion dans la direction verticale mais dont la longueur peut être modifiée dans la direction longitudinale, ledit guide en forme de ciseaux étant fixé par son autre extrémité au cadre de la porte de chargement, caractérisé en ce que chacune des parois latérales du soufflet (1) est maintenue à son bord inférieur par une bande articulée (9) largement rigide à la flexion en direction verticale, bande articulée qui est composée d'un nombre de membres verticalement rigides correspondant au nombre de bandes du soufflet, chaque membre étant composé d'un segment central plus long (9a) et de deux segments latéraux plus courts (9c) qui s'y raccordent, le segment central et les segments latéraux qui y appartiennent étant reliés entre eux chaque fois près du pli adjacent du soufflet, par des articulations (9b) à axe de rotation vertical et chacun des segments plus longs étant relié à une bande du soufflet et les zones adjacentes à un pli des bandes de soufflet qui sont jointes à ce pli étant coincées entre les segments plus courts des bandes articulées qui sont adjacentes à ce pli, ou fixées extérieurement à ceux-ci.

2. Dispositif suivant la revendication 1 caractérisé en ce que chaque fois deux segments plus courts (9c) appartenant à deux membres de la bande articulée (9) se suivant dans la zone des plis extérieurs (8) du soufflet (1) sont assemblés en intercalant une extrémité d'un cadre (4, 7) essentiellement rigide dans la direction verticale s'étendant sur les parois latérales et la paroi supérieure du soufflet.

3. Dispositif suivant la revendication 2 caractérisé en ce que des jupes (16) planes élastiques réduisant la section libre du soufflet sont fixées sur la face extérieure du cadre avant (7).

4. Dispositif suivant l'une quelconque des revendications 1 à 3 caractérisé par un entraînement moteur destiné à déployer ou replier le soufflet, cet entraînement moteur comportant un seul moteur d'entraînement agissant au milieu de l'extrémité avant du soufflet, de préférence à sa partie supérieure.